# FASCICULE DE BREVET EUROPEEN

(11) **EP 1 667 361 B1**
(45) Date de publication et mention de la délivrance du brevet: **15.07.2009**
(21) Numéro de dépôt: 04292855.6
(22) Date de dépôt: 01.12.2004
(51) Int. Cl.: H04L 12/26, H04L 12/24

(54) **Dispositif d'interfaçage entre des outils de diagnostic et des modules d'analyse d'un réseau de communication**
Schnittstellenvorrichtung zwischen Diagnosemitteln und Analyseeinrichtungen eines Kommunikationsnetzwerks
Interface device between diagnostic tools and analysis modules of a communication network

(43) Date de publication de la demande: 07.06.2006
(73) Titulaire: Alcatel Lucent, 75008 Paris (FR)
(72) Inventeur: Marilly, Emmanuel, 91240 Saint-Michel-Sur-Orge (FR); Aghasaryan, Armen, 91120 Palaiseau (FR); Martinot, Olivier, 91210 Draveil (FR)
(74) Mandataire: Chaffraix, Sylvain

(56) Documents cités:
- EP-A- 1 004 964
- WO-A-20/04072860
- US-A- 5 063 523
- US-A1- 2003 033 397
- US-B1- 6 397 245
- EGGERT M A ET AL: "THE FLEXENTTM ELEMENT MANAGEMENT SYSTEM-USING WEB AND OBJECT TECHNOLOGIES TO MANAGE A WIRELESS NETWORK" BELL LABS TECHNOLOGY, BELL LABORATORIES, MURREY HILL, NJ, US, vol. 5, no. 4, 1 octobre 2000 (2000-10-01), pages 113-125, XP001001622 ISSN: 1089-7089

## Description

L'invention concerne les réseaux de communication, et plus précisément l'utilisation, au sein de tels réseaux, des données de diagnostic délivrées par différents outils de diagnostic.

Comme le sait l'homme de l'art certains réseaux de communication, dits gérés, disposent d'un système de gestion de réseau ou NMS (pour « Network Management System ») et/ou d'un système de gestion de services ou OSS (pour « Operating Service System ») comprenant fréquemment un module d'analyse de données de diagnostic.

On entend ici par « module d'analyse », aussi bien des modules de gestion de réseau (« network management module ») que des modules de gestion de services (« OSS module »). Parmi les modules de gestion de réseau, on peut notamment citer les modules de surveillance d'alarmes (permettant d'afficher sur un écran un événement, tel qu'un problème ou dysfonctionnement), les gestionnaires de topologie (chargés de localiser des éléments ou équipements de réseau à l'origine d'un événement), les modules d'ingénierie de trafic (chargés de reconfigurer une partie d'un réseau, notamment pour mettre fin à un problème ou dysfonctionnement). Parmi les modules de gestion de services, on peut notamment citer les modules de gestion d'accords de niveau de service (ou SLA pour « Service Level Agreement »), les modules de gestion de sécurité et les modules de taxation ou facturation.

Par ailleurs, on entend ici par « outil de diagnostic » un équipement (ou module) chargé de déterminer au sein d'un réseau de communication la localisation d'un problème ou dysfonctionnement de réseau ou de service, et/ou le type et/ou la cause première (ou « root cause ») de ce problème ou dysfonctionnement, et/ou les conséquences pour le réseau ou le service de ce problème ou dysfonctionnement. Ces outils de diagnostic ont généralement leurs spécificités. Par exemple, certains d'entre eux délivrent des diagnostics sur des domaines d'un réseau, d'autres délivrent des diagnostics sur des ensembles d'éléments ou équipements de réseau conçus selon une technologie commune, d'autres encore délivrent des diagnostics sur des types de service particuliers. Il n'existe cependant pas d'outil capable de faire un diagnostic de bout en bout sur tout un réseau hétérogène.

Ces modules d'analyse tout comme ces outils de diagnostic sont souvent complémentaires. Hélas, étant généralement développés par des entreprises différentes, ils utilisent des données dont les formats sont rarement compatibles entre eux. Par conséquent, pour qu'un module d'analyse puisse transmettre à un outil de diagnostic une demande de diagnostic puis utiliser les données de diagnostic délivrées par ce dernier, une interface doit être utilisée.

Il existe des solutions pour interfacer de façon simple des outils de gestion de réseau avec le réseau de communication et ses équipements. Une telle solution est par exemple décrite dans l'article « *The Flexent*^{™} *Element Management System - Using Web and Object Technologies to Manage a Wireless Network* » de Marvin A. Eggert, Richard A. Johnston et George W. Vaughan. Mais elle ne peut s'appliquer aux interfaces entre modules d'analyse et modules de diagnostic

Il existe certes quelques interfaces présentant un caractère semi-générique. C'est notamment le cas de celles qui utilisent le protocole SNMP générique (« Single Network Management Protocol »), qui est largement utilisé pour la gestion des réseaux. Mais, elles ne permettent que la transmission des données de diagnostic vers des adresses configurables, ce qui est très insuffisant.

Il a également été proposé des standards, comme par exemple X733, convenant à plusieurs formats différents de données de diagnostic. Mais, ces standards sont encore trop restrictifs et ne contiennent généralement pas toutes les informations nécessaires aux différents modules d'analyse.

En l'absence d'interface adaptée, l'opérateur d'un réseau doit alors concevoir ses propres interfaces propriétaires pour faire interagir (dialoguer) chacun de ses modules d'analyse avec chacun des modules de diagnostic qu'il souhaite utiliser. Parmi les interfaces propriétaires, on peut par exemple citer celle intégrée dans l'outil Cisco Device Fault Manager (V1.0) qui utilise des messages (ou « traps ») comportant une partie générique (RFC 1215) et une partie propriétaire (« Cisco MIBs traps »). La conception de chaque interface nécessite un temps de développement important qui accroît sensiblement le coût d'un réseau de communication.

L'invention a donc pour but de proposer un dispositif d'interfaçage à caractère générique, permettant une interaction complète entre quasiment n'importe quel type d'outil de diagnostic et quasiment n'importe quel type de module d'analyse.

Elle propose à cet effet un dispositif dédié à l'interfaçage entre au moins deux outils de diagnostic et au moins deux modules d'analyse d'un réseau de communication, chargés, notamment, d'analyser des données de diagnostic selon des formats différents.

Ce dispositif d'interfaçage se caractérise par le fait qu'il comprend des moyens de traitement chargés, chaque fois qu'ils reçoivent une demande de diagnostic provenant de l'un des modules d'analyse et relative à un événement survenu au sein du réseau, de sélectionner au moins l'un des outils de diagnostic en fonction d'au moins un critère choisi, de manière à lui communiquer la demande de diagnostic, puis, lorsqu'ils reçoivent des données de diagnostic provenant de chaque outil de diagnostic sélectionné, de convertir ces données de diagnostic dans le format du module d'analyse qui a émis la demande de diagnostic, avant de les transmettre à ce dernier pour qu'il procède à leur analyse.

Le dispositif d'interfaçage selon l'invention peut comporter d'autres caractéristiques qui peuvent être prises séparément ou en combinaison, et notamment :
- des premiers moyens de mémorisation permettant de stocker des règles associées à des identifiants et établissant une relation entre au moins un critère et un événement, et des seconds moyens de mémorisation permettant de stocker des identifiants d'outils de diagnostic en fonction d'identifiants de règle. Dans ce cas, les moyens de traitement sont chargés, lorsqu'ils reçoivent une demande de diagnostic accompagnée d'au moins un critère, de déterminer chaque règle établissant une relation entre l'événement contenu dans la demande de diagnostic reçue et chaque critère qui l'accompagne, puis de déterminer dans les seconds moyens de mémorisation au moins un identifiant d'outil stocké en correspondance de l'identifiant d'une règle déterminée, afin de communiquer la demande de diagnostic reçue à l'outil de diagnostic ainsi identifié ;
   ➢ les moyens de traitement peuvent alors être chargés, lorsqu'ils ont déterminé dans les seconds moyens de mémorisation au moins deux identifiants d'outil stockés en correspondance de l'identifiant d'au moins une règle déterminée, de sélectionner au moins l'un des outils de diagnostic ainsi identifiés, afin de communiquer à chaque outil de diagnostic sélectionné la demande de diagnostic reçue ;
   ➢ certains au moins des identifiants d'outil peuvent être représentatifs d'adresses réseau où peuvent être joints les outils correspondants. Par exemple, certaines au moins de ces adresses réseau sont des adresses IP (« Internet Protocol ») ;
   ➢ une interface de configuration peut être prévue de manière à permettre à un utilisateur de définir certaines au moins des règles ;
- les critères peuvent être choisis au moins parmi un critère de coût de diagnostic (par exemple en terme de ressources réseau ou de temps utilisé ou encore de coût financier si l'outil de diagnostic n'appartient pas à l'opérateur du réseau), un critère d'appartenance à un domaine du réseau, un critère d'appartenance à au moins un ensemble d'éléments de réseau conçus selon une technologie commune, et un critère de choix d'au moins un service pour au moins un client donné raccordé au réseau ;
- ses moyens de traitement peuvent être chargés de combiner les données de diagnostic qui proviennent de plusieurs outils de diagnostic avant de les communiquer au module d'analyse qui a émis la demande de diagnostic ;
- ses moyens de traitement peuvent être chargés de sélectionner certaines au moins des données de diagnostic reçues en fonction du module d'analyse qui a émis la demande de diagnostic, avant de les lui communiquer ;
- ses moyens de traitement peuvent être chargés de traiter des demandes de diagnostic qui proviennent de modules d'analyse tels que les modules de gestion de réseau et les modules de gestion de services (ou « OSS module » pour « Operating Service System module »).

L'invention propose également, d'une part, un serveur de diagnostic, faisant éventuellement partie d'un système de gestion d'un réseau de communication, équipé d'un dispositif d'interfaçage du type de celui présenté ci-avant, et d'autre part, un système de gestion, pour un réseau de communication, équipé d'un dispositif d'interfaçage du type de celui présenté ci-avant.

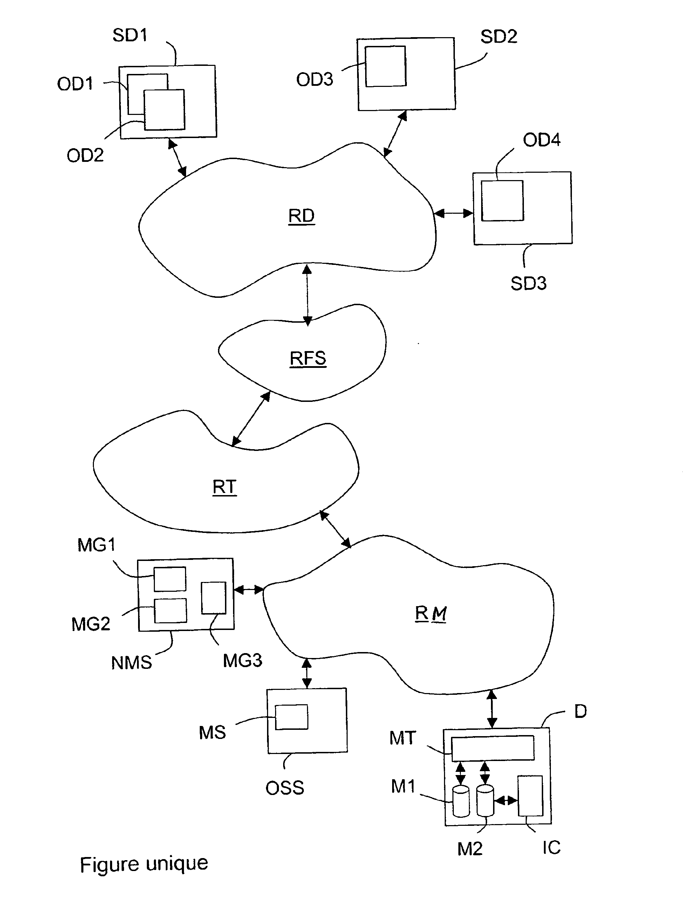

D'autres caractéristiques et avantages de l'invention apparaîtront à l'examen de la description détaillée ci-après, et du dessin annexé, sur lequel l'unique figure illustre de façon très schématique un ensemble de réseaux de communication équipé d'un exemple de réalisation d'un dispositif d'interfaçage selon l'invention. Le dessin annexé pourra non seulement servir à compléter l'invention, mais aussi contribuer à sa définition, le cas échéant.

L'invention a pour objet de permettre l'interfaçage d'outils de diagnostic ODi et de modules d'analyse MGj et MS d'un réseau de communication géré RM.

Dans ce qui suit, on considère à titre d'exemple non limitatif que le réseau de communication géré est un réseau mobile (ou réseau radio cellulaire) RM, comme par exemple un réseau GSM, GPRS/EDGE, UMTS ou WiFi. Mais, l'invention n'est pas limitée à ce type de réseau géré. Elle concerne en effet tout type de réseau géré et notamment les réseaux de communication fixes et les réseaux de données (comme par exemple le réseau Internet). Dans le cas d'un réseau fixe/Internet on est dans une situation de type multi-domaine dans laquelle le réseau est hétérogène du fait qu'il comporte à la fois un réseau d'accès (par exemple de type ADSL) et un réseau de transport (par exemple de type ATM/SDH).

Par ailleurs, on considère dans ce qui suit, à titre d'exemple non limitatif, que les outils de diagnostic ODi sont implantés dans des serveurs de diagnostic SDk raccordés à (ou hébergés par) un réseau de données RD, comme par exemple le réseau Internet. Dans l'exemple illustré sur l'unique figure, l'indice i est compris entre 1 et 4, mais il peut prendre n'importe quelle valeur supérieure ou égale à deux (2). De même, dans l'exemple illustré sur l'unique figure, l'indice j est compris entre 1 et 3, mais il peut prendre n'importe quelle valeur supérieure ou égale à un (1).

Bien entendu, les outils de diagnostic ODi pourraient être implantés ailleurs que dans le réseau de données RD, et notamment dans le réseau de communication RM. On peut également envisager que certains outils de diagnostic soient implantés dans le réseau de données RD, et d'autres dans le réseau de communication RM.

L'accès au réseau de données RD, et donc aux serveurs de diagnostic SDk est contrôlé par des réseaux privés RFS de fournisseurs de services. Dans l'exemple illustré sur l'unique figure, seul un réseau privé RFS de fournisseur de services a été représenté. Mais en réalité le réseau Internet RD est raccordé à de très nombreux réseaux privés de fournisseurs de services.

Le réseau mobile RM est connecté aux réseaux privés RFS des fournisseurs de services par l'intermédiaire d'un réseau de transport RT de type IP adapté au transport de paquets de données (ou « data »).

Un réseau mobile RM peut, d'une façon très schématique, être résumé à un réseau de coeur (ou « Core Network ») couplé à un réseau d'accès radio (appelé UTRAN dans le cas d'un réseau UMTS et BSS dans le cas d'un réseau GSM), tous les deux raccordés à un système de gestion de réseau NMS (« Network Management System ») et à un système de gestion de services OSS (pour « Operating Service System »).

Le réseau d'accès radio comporte des équipements tels que des stations de base (appelées Node Bs dans le cas d'un réseau UMTS et BTSs dans le cas d'un réseau GSM) et des contrôleurs de réseau radio ou noeuds (appelés RNCs dans le cas d'un réseau UMTS et BSCs dans le cas d'un réseau GSM), raccordés entre eux. II est rappelé que chaque station de base contrôle au moins une cellule couvrant une zone radio dans laquelle des terminaux mobiles peuvent établir (ou poursuivre) des liaisons radio.

Le réseau de coeur comporte d'autres équipements, tels que des noeuds SGSN et GGSN permettant d'accéder au réseau de transport RT.

Dans un réseau géré, de nombreux équipements sont paramétrables et peuvent être à l'origine de problèmes et de dysfonctionnements qui nuisent à son bon fonctionnement.

Comme indiqué dans la partie introductive, afin de déterminer la cause première ou racine (« root »), d'un problème ou dysfonctionnement l'opérateur d'un réseau mobile RM doit utiliser les outils de diagnostic ODi qui sont implantés dans les serveurs de diagnostic SDj. Ces outils de diagnostic ODi sont chargés, lorsqu'on leur en fait la demande, au moyen d'une demande de diagnostic relative à un événement (comme par exemple un problème ou un dysfonctionnement de réseau ou de service) survenu dans le réseau mobile RM, de collecter des informations (valeurs de compteurs, mesures, et analogues) représentatives de l'état d'équipements (ou éléments) du réseau mobile RM et de délivrer des données de diagnostic représentatives de la localisation de cet événement, et/ou du type et/ou de la cause première de cet événement, et/ou des conséquences de cet événement pour le réseau mobile RM ou le service.

Chaque outil de diagnostic ODi est généralement adapté à un type particulier de diagnostic (sans connaître le(s) critère(s) qui fait (font) qu'il est choisi). Par exemple, l'outil de diagnostic OD1 est chargé d'effectuer des diagnostics relatifs à des domaines du réseau mobile RM, l'outil de diagnostic OD2 est chargé d'effectuer des diagnostics relatifs à des ensembles d'éléments ou équipements de réseau conçus selon une technologie commune, l'outil de diagnostic OD3 est chargé d'effectuer des diagnostics relatifs à des types de service particuliers et l'outil de diagnostic OD4 est chargé d'effectuer des diagnostics prenant en compte la notion de coût (en termes de temps de diagnostic ou de ressources réseau ou encore de coût financier si l'outil de diagnostic n'appartient pas à l'opérateur du réseau.

Les données de diagnostic délivrées par les outils de diagnostic ODi, selon des formats différents pour certaines d'entre elles, sont destinées à être utilisées par des modules d'analyse MGj et MS, qui sont généralement implantés dans le système de gestion de réseau NMS lorsqu'il s'agit de modules de gestion de réseau MGj et dans le système de gestion de services OSS lorsqu'il s'agit de modules de gestion de services MS.

Parmi les modules de gestion de réseau MGj fréquemment utilisés, on peut notamment citer :
- le module de surveillance d'alarmes qui est chargé d'afficher sur un écran un événement tel qu'un problème ou dysfonctionnement de réseau ; c'est par exemple le module référencé MG1 sur l'unique figure,
- le gestionnaire de topologie qui est chargé de localiser des éléments ou équipements de réseau à l'origine d'un événement ; c'est par exemple le module référencé MG2 sur l'unique figure,
- le module d'ingénierie de trafic qui est chargé de reconfigurer une partie d'un réseau, notamment pour mettre fin à un problème ou dysfonctionnement ; c'est par exemple le module référencé MG3 sur l'unique figure.

Parmi les modules de gestion de services MS fréquemment utilisés, on peut notamment citer le module de gestion d'accords de niveau de service, qui est par exemple chargé, en cas de réception d'une alarme relative à une qualité de service (QoS), de vérifier si cette QoS dépasse un seuil défini dans un accord de niveau de service (ou SLA pour « Service Level Agreement ») passé entre l'opérateur du réseau mobile RM et un ou plusieurs de ses clients. On peut également citer les modules de gestion de sécurité et les modules de taxation ou facturation (ou « billing »).

Ces modules d'analyse MGj et MS sont agencés pour analyser des données de diagnostic qui se présentent sous des formats spécifiques qui ne sont pas tous identiques et sont en général des formats propriétaires.

Afin de permettre à tous ces modules d'analyse MGj et MS d'interagir au mieux avec les outils de diagnostic ODi, l'invention propose un dispositif d'interfaçage D. Ce dernier peut être implanté en différents endroits. Ainsi, dans l'exemple illustré sur l'unique figure, le dispositif d'interfaçage D est un équipement (carte électronique ou boîtier électronique) raccordé au réseau mobile RM, par exemple au niveau de son réseau de coeur, de manière à pouvoir dialoguer avec le système de gestion de réseau NMS, qui comprend les modules de gestion de réseau MGj, et avec le système de gestion de services OSS, qui comprend le(s) module(s) de gestion de services MS. En variante, le dispositif d'interfaçage D pourrait être implanté dans un serveur de diagnostic, faisant éventuellement partie du système de gestion de réseau NMS ou du système de gestion de services OSS.

Le dispositif d'interfaçage D, selon l'invention, comporte au moins un module de traitement MT chargé, quand il reçoit une demande de diagnostic provenant de l'un des modules d'analyse MGj ou MS et relative à un événement survenu au sein du réseau mobile RM, de sélectionner au moins l'un des outils de diagnostic ODi en fonction d'au moins un critère choisi.

Tout type de critère, en rapport avec un type de diagnostic effectué par un outil de diagnostic ODi, peut être envisagé. Ainsi, un premier critère peut porter sur le coût du diagnostic en termes de temps de diagnostic et/ou de prix de revient. Un deuxième critère peut porter sur l'appartenance à un ou plusieurs domaines du réseau mobile RM. Un troisième critère peut porter sur l'appartenance à un ou plusieurs ensembles d'éléments de réseau conçus selon une ou plusieurs technologies. Un quatrième critère peut porter sur un choix particulier, comme par exemple un ou plusieurs services pour un ou plusieurs clients donnés raccordés au réseau mobile RM. Un cinquième critère peut porter sur la fiabilité des résultats de diagnostic. Un sixième critère peut porter sur la finesse du diagnostic. Un septième critère peut porter sur une ou plusieurs zones géographiques. Un huitième critère peut porter sur la disponibilité.

Afin que le module de traitement MT puisse effectuer ses sélections, il peut par exemple utiliser des règles associées à des identifiants et établissant chacune une relation entre au moins un critère et un événement type pouvant survenir dans le réseau.

Une règle peut par exemple se présenter sous la forme suivante :
« si le diagnostic est requis pour un service de type vidéo, une technologie de type ADSL et une adresse d'équipement égale à 125.23.21.45/255.255.0.0, alors utiliser l'adresse d'outil égale à 125.24.156.12, le type égal à l'inspecteur de réseau Alcatel 5620 et le format de message outil égal à Alcatel 1 ».

De telles règles peuvent être stockées dans des premiers moyens de mémorisation M1 du dispositif d'interfaçage D. Ces premiers moyens de mémorisation M1 peuvent se présenter sous n'importe quelle forme, et notamment sous la forme d'une base de données, d'une table de correspondance ou d'un annuaire (ou répertoire). Par ailleurs, ils peuvent éventuellement faire partie intégrante du module de traitement MT.

Chacune de ces règles correspond par exemple à un ou plusieurs outils de diagnostic ODi adaptés pour répondre à la demande de diagnostic, compte tenu de l'événement auquel elle se rapporte et du (ou des) critère(s) qui l'accompagne(nt).

Comme cela est illustré sur l'unique figure, le dispositif d'interfaçage D peut comporter une interface de configuration IC permettant à un utilisateur de définir certaines au moins des règles, puis de les stocker dans les premiers moyens de mémorisation M1.

Par ailleurs, le dispositif d'interfaçage D peut par exemple comporter des seconds moyens de mémorisation M2 dans lesquels sont stockés des identifiants d'outils de diagnostic ODi en fonction d'identifiants de règles. Ces seconds moyens de mémorisation M2 peuvent se présenter sous n'importe quelle forme, et notamment sous la forme d'une base de données, d'une table de correspondance ou d'un annuaire (ou répertoire). Par ailleurs, ils peuvent éventuellement faire partie intégrante du module de traitement MT. Ils peuvent également faire partie des premiers moyens de mémorisation M1. On peut également avoir des premiers moyens de mémorisation M1 séparés physiquement des seconds moyens de mémorisation M2.

Les identifiants d'outil de diagnostic peuvent être de tout type. Ils représentent par exemple les adresses réseau où les outils de diagnostic ODi correspondants peuvent être joints. Dans l'exemple décrit, les outils de diagnostic ODi sont implantés dans des serveurs de diagnostic SDk raccordés au réseau Internet RD, si bien que les identifiants d'outil de diagnostic sont préférentiellement des adresses IP.

Ainsi, lorsque le module de traitement MT reçoit d'un module d'analyse MGj ou MS une demande de diagnostic accompagnée d'au moins un critère choisi, il accède aux premiers moyens de mémorisation M1 afin de déterminer chaque règle qui établit une relation entre l'événement qui est contenu dans la demande de diagnostic reçue et chaque critère qui l'accompagne. Le module de traitement MT dispose alors de l'identifiant de chaque règle qu'il vient de déterminer.

Le module de traitement MT accède alors aux seconds moyens de mémorisation M2 afin de déterminer chaque identifiant d'outil stocké en correspondance de chaque identifiant de règle déterminé. Si le module de traitement MT ne dispose que d'un seul identifiant d'outil de diagnostic, cela veut dire qu'il n'existe qu'un seul outil de diagnostic ODi adapté à l'événement qui est contenu dans la demande de diagnostic reçue compte tenu du ou des critères qui l'accompagnent. En revanche, lorsque le module de traitement MT dispose de plusieurs identifiants d'outil de diagnostic, cela veut dire qu'il existe plusieurs outils de diagnostic ODi adaptés à l'événement qui est contenu dans la demande de diagnostic reçue compte tenu du ou des critères qui l'accompagnent.

Une fois la sélection d'outil(s) de diagnostic ODi effectuée, le module de traitement MT transmet à chaque outil de diagnostic ODi sélectionné (à l'adresse réseau désignée par l'identifiant d'outil) la demande de diagnostic reçue, puis il attend de recevoir ses (leurs) données de diagnostic.

Une fois que le module de traitement MT a reçu les données de diagnostic de chaque outil de diagnostic ODi sélectionné, il les convertit au format du module d'analyse MGj ou MS qui a émis la demande de diagnostic, puis il lui transmet ces données converties afin qu'il procède à leur analyse. Il peut éventuellement procéder à la sélection de certaines données de diagnostic avant de les transmettre au module d'analyse MGj ou MS qui a émis la demande de diagnostic, de manière à éviter de communiquer des données qu'il n'utiliserait pas lors de son analyse.

Afin de procéder aux conversions, le module de traitement MT dispose de la définition du format utilisé par chaque module d'analyse MGj ou MS auquel il est couplé.

Lorsque le module de traitement MT a sélectionné plusieurs outils de diagnostic ODi, et donc qu'il a reçu plusieurs ensembles de données de diagnostic provenant de chacun d'entre eux, il peut être amené à sélectionner certaines de ces données de diagnostic, de préférence après les avoir converties, de manière à éviter de communiquer des données redondantes et/ou à supprimer certaines données qui ne seront pas utilisées par le module d'analyse demandeur MGj ou MS lors de son analyse.

Si toutes les données reçues sont complémentaires, le module de traitement MT les combine, de préférence après les avoir converties.

II est important de noter que la conversion des données de diagnostic reçues n'est pas systématique. II peut en effet arriver qu'un outil de diagnostic ODi ait été conçu pour délivrer des données de diagnostic au format exact d'un module d'analyse MGj ou MS.

Le dispositif d'interfaçage D selon l'invention, et notamment son module de traitement MT, ainsi que ses éventuels premiers M1 et/ou seconds M2 moyens de mémorisation, peuvent être réalisés sous la forme de circuits électroniques, de modules logiciels (ou informatiques), ou d'une combinaison de circuits et de logiciels.

Une partie au moins du module de traitement MT peut être agencée sous la forme d'un moteur de règles (ou « rule engine ») afin de déterminer chaque règle correspondant à un événement et à au moins un critère choisi. En variante, le module de traitement MT peut être agencé sous la forme d'un système expert.

Par ailleurs, les interactions entre le module de traitement MT, d'une part, et les outils de diagnostic ODi et/ou les modules d'analyse MGj et MS, d'autre part, peuvent par exemple se faire au moyen de la technologie SNMP ou de la technologie connue sous l'appellation « web services » qui facilite notamment les intégrations et les mécanismes de négociation.

Il est important de noter que les éléments constituants le dispositif d'interfaçage D ne sont pas forcément tous regroupés en un même lieu ou dans un même équipement. Ils peuvent en effet être répartis en plusieurs endroits et/ou dans plusieurs équipements. Ainsi, on peut envisager que le module de traitement MT soit implanté dans un serveur de diagnostic, tandis que les premiers M1 et/ou seconds M2 moyens de mémorisation sont implantés dans le NMS ou l'OSS. Il est cependant préférable que tous les éléments constituant le dispositif d'interfaçage D soient regroupés dans un même équipement.

L'invention ne se limite pas aux modes de réalisation de dispositif d'interfaçage, de serveur de diagnostic et de système de gestion décrits ci-avant, seulement à titre d'exemple, mais elle englobe toutes les variantes que pourra envisager l'homme de l'art dans le cadre des revendications ci-après.

## Revendications

1. Dispositif (D) d'interfaçage entre au moins deux outils de diagnostic (ODi) agencés pour déterminer la cause première d'un dysfonctionnement et au moins deux modules d'analyse (MGj, MS) d'un réseau de communication (RM), agencés pour analyser des données de diagnostic selon des formats différents, **caractérisé en ce qu'**il comprend des moyens de traitement (MT) agencés, en cas de réception d'une demande de diagnostic provenant de l'un desdits modules d'analyse (MGj, MS) et relative à un événement survenu au sein dudit réseau (RM), i) pour sélectionner au moins l'un desdits outils de diagnostic (OD2) en fonction d'au moins un critère choisi, de manière à lui communiquer ladite demande de diagnostic, et ii) à réception de données de diagnostic provenant de chaque outil de diagnostic sélectionné (OD2), pour convertir lesdites données de diagnostic dans le format dudit module d'analyse (MG1) ayant émis la demande de diagnostic, puis transmettre à ce dernier les données converties afin qu'il procède à leur analyse.

2. Dispositif selon la revendication 1, **caractérisé en ce qu'**il comprend des premiers moyens de mémorisation (M1) propres à stocker des règles associées à des identifiants et établissant une relation entre au moins un critère et un événement, et des seconds moyens de mémorisation (M2) propres à stocker des identifiants d'outils de diagnostic en fonction d'identifiants de règle, et **en ce que** lesdits moyens de traitement (MT) sont agencés, en cas de réception d'une demande de diagnostic accompagnée d'au moins un critère, i) pour déterminer dans lesdits premiers moyens de mémorisation (M1) chaque règle établissant une relation entre l'événement contenu dans ladite demande de diagnostic reçue et chaque critère qui l'accompagne, puis ii) pour déterminer dans lesdits seconds moyens de mémorisation (M2) au moins un identifiant d'outil stocké en correspondance de l'identifiant d'une règle déterminée, de manière à communiquer ladite demande de diagnostic reçue à l'outil de diagnostic (OD2) ainsi identifié.

3. Dispositif selon la revendication 2, **caractérisé en ce que** lesdits moyens de traitement (MT) sont agencés, lorsqu'ils ont déterminé dans lesdits seconds moyens de mémorisation (M2) au moins deux identifiants d'outil stockés en correspondance de l'identifiant d'au moins une règle déterminée, pour sélectionner au moins l'un des outils de diagnostic ainsi identifiés, de manière à communiquer à chaque outil de diagnostic sélectionné ladite demande de diagnostic reçue.

4. Dispositif selon l'une des revendications 2 et 3, **caractérisé en ce que** certains au moins desdits identifiants d'outil sont représentatifs d'adresses réseau où peuvent être joints lesdits outils de diagnostic (ODi) correspondants.

5. Dispositif selon la revendication 4, **caractérisé en ce que** certaines au moins desdites adresses réseau sont des adresses IP.

6. Dispositif selon l'une des revendications 2 à 5, **caractérisé en ce qu'**il comprend une interface de configuration (IC) propre à permettre à un utilisateur de définir certaines au moins desdites règles.

7. Dispositif selon l'une des revendications 1 à 6, **caractérisé en ce que** lesdits critères sont choisis dans un groupe comprenant au moins un critère de coût de diagnostic, un critère d'appartenance à au moins un domaine dudit réseau, un critère d'appartenance à au moins un ensemble d'éléments de réseau conçus selon une technologie commune, et un critère de choix d'au moins un service pour au moins un client donné raccordé audit réseau.

8. Dispositif selon l'une des revendications 1 à 7, **caractérisé en ce que** lesdits moyens de traitement (MT) sont agencés pour combiner les données de diagnostic provenant de plusieurs outils de diagnostic (ODi) avant de les communiquer audit module d'analyse (MG1) ayant émis la demande de diagnostic.

9. Dispositif selon l'une des revendications 1 à 8, **caractérisé en ce que** lesdits moyens de traitement (MT) sont agencés pour sélectionner certaines au moins desdites données de diagnostic reçues en fonction dudit module d'analyse (MG1) ayant émis la demande de diagnostic, avant de transmettre à ce dernier les données de diagnostic sélectionnées et converties.

10. Dispositif selon l'une des revendications 1 à 9, **caractérisé en ce que** lesdits moyens de traitement (MT) sont agencés pour traiter des demandes de diagnostic provenant de modules d'analyse (MGj. MS) choisis dans un groupe comprenant les modules de gestion de réseau (MGj) et les modules de gestion de services (MS).

11. Serveur de diagnostic (SD) pour un réseau de communication (RM), comprenant un dispositif d'interfaçage (D) entre au moins deux outils de diagnostic (ODi) agencés pour déterminer la cause première d'un dysfonctionnement et au moins deux modules d'analyse (MGj, MS) dudit réseau de communication agencés pour analyser des données de diagnostic selon des formats différents, **caractérisé en ce que** le dispositif d'interfaçage comprend des moyens de traitement (MT) agencés, en cas de réception d'une demande de diagnostic provenant de l'un desdits modules d'analyse (MGj, MS) et relative à un événement survenu au sein dudit réseau (RM), i) pour sélectionner au moins l'un desdits outils de diagnostic (OD2) en fonction d'au moins un critère choisi, de manière à lui communiquer ladite demande de diagnostic, et ii) à réception de données de diagnostic provenant de chaque outil de diagnostic sélectionné (OD2), pour convertir lesdites données de diagnostic dans le format dudit module d'analyse (MG1) ayant émis la demande de diagnostic, puis transmettre à ce dernier les données converties afin qu'il procède à leur analyse.

12. Système de gestion (NMS ; OSS) pour un réseau de communication (RM), comprenant un serveur de diagnostic selon la revendication 11, comportant un dispositif d'interfaçage (D) entre au moins deux outils de diagnostic (ODi) agencés pour déterminer la cause première d'un dysfonctionnement et au moins deux modules d'analyse (MGj, MS) dudit réseau de communication agencés pour analyser des données de diagnostic selon des formats différents, **caractérisé en ce que** le dispositif d'interfaçage comprend des moyens de traitement (MT) agencés, en cas de réception d'une demande de diagnostic provenant de l'un desdits modules d'analyse (MGj, MS) et relative à un événement survenu au sein dudit réseau (RM), i) pour sélectionner au moins l'un desdits outils de diagnostic (OD2) en fonction d'au moins un cntère choisi, de manière à lui communiquer ladite demande de diagnostic, et ii) à réception de données de diagnostic provenant de chaque outil de diagnostic sélectionné (OD2), pour convertir lesdites données de diagnostic dans le format dudit module d'analyse (MG1) ayant émis la demande de diagnostic, puis transmettre à ce dernier les données converties afin qu'il procède à leur analyse.

13. Système de gestion (NMS ; OSS) pour un réseau de communication (RM), comprenant un dispositif (D) d'interfaçage selon l'une des revendications 1 à 10 entre au moins deux outils de diagnostic (ODi) agencés pour déterminer la cause première d'un dysfonctionnement et au moins deux modules d'analyse (MGj, MS) d'un réseau de communication (RM) comportant des équipements de réseau, agencés pour analyser des données de diagnostic selon des formats différents, **caractérisé en ce que** le dispositif d'interfaçage comprend des moyens de traitement (MT) agencés, en cas de réception d'une demande de diagnostic provenant de l'un desdits modules d'analyse (MGj, MS) et relative à un événement survenu au sein dudit réseau (RM), i) pour sélectionner au moins l'un desdits outils de diagnostic (OD2) en fonction d'au moins un critère choisi, de manière à lui communiquer ladite demande de diagnostic, et ii) à réception de données de diagnostic provenant de chaque outil de diagnostic sélectionné (OD2), pour convertir lesdites données de diagnostic dans le format dudit module d'analyse (MG1) ayant émis la demande de diagnostic, puis transmettre à ce dernier les données converties afin qu'il procède à leur analyse.

## Claims

1. A device (D) for interfacing at least two diagnostics tools (OD1), configured to determine the original cause of a malfunction, and at least two analysis modules (MGj, MS) of a communication network (RM), configured to analyze diagnostics data in different formats, **characterized in that** it comprises processing means (MT) configured, in the event of receiving a diagnostics request from one of said analysis modules (MGj, MS) and regarding an event that occurred within said network (RM), i) to select at least one of said diagnostics tools (OD2) based on at least one chosen criterion, so as to communicate thereto said diagnostics request, and ii) upon receiving diagnostic from each selected diagnostics tool (OD2), to convert said diagnostics data into the format of said analysis modules (MG1) that sent the diagnostics request, them transmitting thereto the converted data so that it may analyze them.

2. A device according to claim 1, **characterized in that** it comprises first memorization means (M1) capable of storing rules associated with identifiers and establishing a relationship between at least one criterion and one event, and second memorization means (M2) capable of storing the identifiers of diagnostics tools based on rule identifiers, and **in that** said processing means (MT) are configured, in the event of receiving a diagnostics request accompanied by at least one criterion, i) to determine within said first memorization means (M1) every rule establishing a relationship between the event contained within said received diagnostics request and each criterion which accompanies it, then ii) to determine within said second memorization means (M2) at least one tool identifier saved as a match for the identifier of a determined rule, so as to communicate said received diagnostics request to the diagnostics tool (OD2) thereby identified.

3. A device according to claim 2, **characterized in that** said processing (MT) are configured, once they determined within said second memorization means (M2) at least two tool identifiers saved as a match for the identifier of at least one determined rule, to select at least one of the diagnostics tools thereby identified, so as to communicate said received diagnostics request every selected diagnostics tool.

4. A device according to one of claims 2 or 3, **characterized in that** at least some of said tool identifies are representative of network addresses where said matching diagnostics tools (ODi) may be found.

5. A device according to claims 4, **characterized in that** at least some of said network addresses are IP addresses.

6. A device according to one of claim 2 to 5, **characterized in that** comprises a configuration interface (IC) capable of enabling a user to define at least some of said rules.

7. A device according to one of claims 1 to 6, **characterized in that** said criteria are chosen from a group comprising at least one diagnostics cost criterion, one criterion of belonging to at least one domain of said network, one criterion of belonging to at least one set of network elements designed according to a shared technology, and one criterion of selecting at least one service for at least one given client connected to said network.

8. A device according to one of claim 1 to 7, **characterized in that** said processing means (MT) are configured to combine the diagnostics data from multiple diagnostics tools (ODi) before communicating them to said analysis module (MG1) that issued the diagnostics request.

9. A device according to one of claims 1 to 8, **characterized in that** said processing means (MT) are configured to select at least some of said received diagnostics data based on said analysis module (MG1) that issued the diagnostics request, before transmitting the selected, converted diagnostics data to said module.

10. A device according to one of claims 1 to 9, **characterized in that** said processing means (MT) are configured to process the diagnostics requests coming from analysis modules (MGj, MS) chosen from among a group comprising the network management modules (MG) and the service management modules (MS).

11. A diagnostics server (SD) for a communication network (RM), comprising a device (D) for interfacing at least two diagnostics tools (ODi) configured to determine the original cause of a malfunction, and at least two analysis modules (MGj, MS) of a communication network (RM), configured to analyze diagnostics data in different formats, **characterized in that** the interfacing device comprises processing means (MT) configured, in the event of receiving a diagnostics request from one of said analysis modules (MGj, MS) and regarding an event that occurred within said network (RM), i) to select at least one of said diagnostics tools (OD2) based on at least one chosen criterion, so as to communicate thereto said diagnostics request, and ii) upon receiving diagnostics data from each selected diagnostics tool (OD2), to convert said diagnostics data into the format of said analysis module (MG1) that sent the diagnostics request, then transmitting thereto the converted data so that it may analyze them.

12. A management system (NMS; OSS) for a communication network (RM), comprising a diagnostics server (S) according to claim 11, including a device (D) for interfacing at least two diagnostics tools (ODi) configured to determine the original cause of a malfunction, and at least two analysis modules (MGj, MS) of a communication network (RM), configured to analyze diagnostics data in different formats, **characterized in that** the interfacing device comprises processing means (MT) configured, in the event of receiving a diagnostics request from one of said analysis modules (MGj, MS) and regarding an event that occurred with said network (RM), i) to select at least one of said diagnostic (OD2) based on at least one chosen criterion, so as to communicate thereto said diagnostics request, and ii) upon receiving diagnostics data from each selected diagnostics tool (OD2), to convert said diagnostics data into the format of said analysis module (MG1) that sent the diagnostics request, then transmitting thereto the converted data so that it may analyze them.

13. A management system (NMS; OSS) for a communication network (RM), comprising an interfacing device (D) according to one of claims 1 to 10, between at least two diagnostics tools (OD1), configured to determine the original cause of a malfunction, and at least two analysis modules (MGj, MS) of a communication network (RM) comprising network elements, configured to analyze diagnostics data in different formats, **characterized in that** the interfacing devices comprises processing means (MT) configured, in the event of receiving a diagnostics request from one of said analysis modules (MGj, MS) and regarding an event that occurred within said network (RM), i) to select at least one of said diagnostics tools (OD2) based on at least one chosen criterion, so as to communicate thereto said diagnostic request, and ii) upon receiving diagnostics data from each selected diagnostics tool (OD2), to convert said diagnostics data into the format of said analysis module (MG1) that sent the diagnostics request, then transmitting thereto the converted data so that it may analyze them.

## Patentansprüche

1. Schnittstellenanordnung (D) zwischen mindestens zwei Diagnose-Tools (ODi), welches ausgelegt sind, um die wirkliche Ursache einer Funktionsstörung zu ermitteln, und mindestens zwei Analysemodulen (MGj, MS) eines Kommunikationsnetzwerks (RM), welche aufgelegt sind, um die Diagnosedaten gemäß unterschiedlichen Formaten zu analysieren, **dadurch gekennzeichnet, dass** sie Verarbeitungsmittel (MT) umfasst, welche ausgelegt sind, um im Fall des Empfang einer von einem der besagten Analysemodulen (MGj, MS) ausgegebenen und ein innerhalb des besagten Netzwerks (RM) aufgetretenes Ereignis betreffende Diagnoseanfrage i) mindestens eines der besagten Diagnose-Tools (OD2) nach mindestens einem ausgewählten Kriterium auszuwählen, um ihm die besagte Diagnoseanfrage weiterzuleiten, und um ii) nach Empfang der von jedem ausgewählten Diagnose-Tool (OD2) gelieferten Diagnosedaten die besagten Diagnosedaten in das Format des besagten Analysemoduls (MG1), welches die Diagnoseanfrage ausgegeben hat, zu konvertieren und diesem die konvertierte Daten zu deren Analyse zu übersenden.

2. Anordnung nach Anspruch 1, **dadurch gekennzeichnet, dass** sie erste Speichermittel (M1), welche geeignet sind, um Kennungen zugeordnet Regeln, welche einen Zusammenhand zwischen mindestens einem Kriterium und einem Ereignis verstellen, zu speichern, und zweite Speichermittel (M2), welche geeignet sind, um Kennungen von Diagnose-Tools entsprechend den Regelkennungen zu speichern, umfasst, und dass die besagten Verarbeitungsmittel (MT) ausgelegt sind, um im Fall des Empfangs einer von mindestens einem Kriterium begleiteten Diagnoseanforderung i) in den besagten ersten Speichermitteln (M1) jede Regel, welche einen Zusammenhand zwischen dem in der besagten empfangenden Diagnoseanfrage enthaltenden Ereignis und jedem die Diagnoseanfrage begleitenden Kriterium zu ermitteln, und anschließend ii) in den besagten zweiten Speichermitteln (M2) mindestens eine gespeicherte, der Kennung einer bestimmten Regel entsprechend Tool-Kennung zu ermitteln, um die besagte empfangene Diagnoseanfrage an das so identifizierte Diagnose-Tool (OD2) weiterzuleiten.

3. Anordnung nach Anspruch 2, **dadurch gekennzeichnet, dass** die besagten Verarbeitungsmittel (MT) ausgelegt sind, um, wenn sie in den besagten zweiten Speichermitteln (M2) mindestens gespeicherte Toot-Kennungen, welche der Kennung von mindestens einer bestimmten Regel entsprechen, ermittelt haben, jedem ausgewählten Diagnose-Tool die besagte empfangene Diagnoseanfrage weiterzuleiten.

4. Anordnung nach der Ansprüche 2 und 3, **dadurch gekennzeichnet, dass** mindestens einige der besagten Tool-Kennungen für Netzwerkadressen, unter welchen die entsprechenden besagten Diagnose-Tools (ODi) erreichbar sind, repräsentativ sind.

5. Anordnung nach Anspruch 4, **dadurch gekennzeichnet, dass** mindestens einige der besagten Netzwerkadressen IP-Adressen sind.

6. Anordnung nach einem der Ansprüche 2 bis 5, **dadurch gekennzeichnet, dass** sie eine Konfigurationsschnittstelle (IC) umfasst, welche geeignet ist, um einem Benutzter das Definieren von mindestens einigen der besagten Regeln zu ermöglichen.

7. Anordnung nach einem der Anspruche 1 bis 6, **dadurch gekennzeichnet, dass** die besagten Kriterien in einer Gruppe ausgewählt werden, welche mindestens ein Kriterium für die Diagnosekosten, ein Kriterium für die Zugehörigkeit zu mindestens einem Bereich des besagten Netzwerks, ein Kriterium für die Zugehörigkeit zu mindestens eine Menge von gemäß einer gemeinsamen Technologie gestalteten Netzwerkelementen und ein Kriterium für die Auswahl von mindestens einem Dienst für mindestens einen gegebenen, an das Netzwerk angeschlossene Client umfasst.

8. Anordnung nach einem der Ansprüche 1 bis 7, **dadurch gekennzeichnet, dass** die besagten Verarbeitungsmittel (MT) ausgelegt sind, um die von mehreren Diagnose-Tools (ODi) gelieferten Diagnosedaten zu kombinieren, bevor sie diese an das besagte Analysemodul (MG1), welches die Diagnoseanforderung ausgegeben hat, weiterleiten

9. Anordnung nach einem der Ansprüche 1 bis 8, **dadurch gekennzeichnet, dass** die besagten Verarbeitungsmittel (MT) ausgelegt sind, um mindestens einige der besagten empfangenen Diagnosedaten entsprechend dem Analysemodul (MG1), welches die Diagnoseanforderung ausgegeben hat, auszuwählen, bevor sie die ausgewählten und konvertierten Diagnosedaten an das besagte Analysemodul (MG1) weiterleiten.

10. Anordnung nach einem der Ansprüche 1 bis 9, **dadurch gekennzeichnet, dass** die Verarbeitungsmittel (MT) ausgelegt sind, um die von Analysemodulen (MGj, MS), welche in einer die Netzwerkverwaltungsmodule (MGj) und die Dienstverwaltungsmodule (MS) umfassenden Gruppe gewählt werden, ausgegebenen Diagnoseanforderungen zu bearbeiten

11. Diagnose-Server (SD) für ein Kommunikationsnetzwerk (RM) mit einer Schnittstellenanordnung (D) zwischen mindestens zwei Diagnose-Tools (ODi), welche ausgelegt sind, um die wirkliche Ursache einer Funktionsstörung zu ermitteln, und mindestens zwei Analysemodulen (MGj, MS) des besagten Kommunikationsnetzwerks, welche ausgelegt sind, um die Diagnosedaten gemäß unterschiedlichen Formaten zu analysieren, **dadurch gekennzeichnet, dass** die Schnittstellenanordnung Verarbeitungsmittel (MT) umfasst, welche ausgelegt sind, um im Fall des Empfangs einer von einem der besagten Analysemodulen (MGj, MS) ausgegebenen und ein innerhalb des besagten Netzwerks (RM) aufgetretenes Ereignis betreffende Diagnoseanfrage i) mindestens eines der besagten Diagnose-Tools (OD2) nach mindestens einem ausgewählten Kriterium auszuwählen, um diesem die besagte Diagnoseanfrage weiterzuleiten, und um ii) nach Empfang der von jedem ausgewählten Diagnose-Tool (OD2) gelieferten Diagnosedaten die besagten Diagnosedaten in das Format des besagten Analysemoduls (MG1), welches die Diagnoseanfrage ausgegeben hat, zu konvertieren und diesem die konvertieren Daten zu deren Analyse zu übersenden.

12. Verwaltungssystem (NMS; OSS) für ein Kommunikattonsnetzwerk (RM), welches einen Diagnose-Server nach Anspruch 11 umfasst, mit einer Schnittstellenanordnung (D) zwischen mindestens zwei Diagnose-Tools (ODi), welche ausgelegt sind, um die wirkliche Ursache einer Funktionsstörung zu ermitteln, und mindestens zwei Analysemodulen (MGj, MS) des besagten Kommunikationsnetzwerks, welche ausgelegt sind, um die Diagnosedaten gemäß unterschiedlichen Formaten zu analysieren, **dadurch gekennzeichnet, dass** die Schnittstellenanordnung Verarbeitungsmittel (MT) umfasst, welche ausgelegt sind, um im Fall des Empfangs einer von einem der besagten Analysemodulen (MGj, MS) ausgegebenen und ein innerhalb des besagten Netzwerks (RM) aufgetretenes Ereignis betreffende Diagnoseanfrage i) mindestens eines der besagten Diagnose-Tools (OD2) nach mindestens einem ausgewählten Kriterium auszuwählen, um diesem die besagte Diagnoseanfrage weiterzuleiten, und um ii) nach Empfang der von jedem ausgewählten Diagnose-Tool (OD2) gelieferten Diagnosedaten die besagten Diagnosedaten in das Format des besagten Analysemoduls (MG1), welches die Diagnoseanfrage ausgegeben hat, zu konvertieren und diesem die konvertierten Daten zu deren Analyse zu übersenden.

13. Verwaltungssystem (NMS; OSS) für ein Kommunikationsnetzwerk (RM), welches eine Schnittstellenanordnung (D) nach einem der Anspruche 1 bis 10 zwischen mindestens zwei Diagnose-Tools (ODi), welche ausgelegt sind, um die wirkliche Ursache einer Funktionsstörung zu ermitteln, und mindestens zwei Analysemodulen (MGj, MS) eines Kommunikationsnetzwerks (RM) mit Netzwerkeinrichtungen, welche ausgelegt sind, um die Diagnosedaten gemäß unterschiedlichen Formaten zu analysieren, umfasst, **dadurch gekennzeichnet, dass** die Schnittstellenanordnung Verarbeitungsmittel (MT) umfasst, weiche aufgelegt sind, um im Fall des Empfangs einer von einem der besagten Analysemodulen (MGj, MS) ausgegebenen und ein innerhalb des besagten Netzwerks (RM) aufgetretenes Ereignis betreffende Diagnoseanfrage i) mindestens eines der besagten Diagnose-Tools (OD2) nach mindestens einem ausgewählten Kriterium auszuwählen, um diesem die besagte Diagnoseanfrage weiterzuleiten, und um ii) nach Empfang der von jedem ausgewählten Diagnose-Tool (OD2) gelieferten Diagnosedaten die besagten Diagnosedaten in das Format des besagten Analysemoduls (MG1), welches die Diagnoseanfrage ausgegeben hat, zu konvertieren und diesem die konvertierten Daten zu deren Analyse zu übersenden.
